# EUROPÄISCHE PATENTANMELDUNG

(11) **EP 0 647 842 A1**
(43) Veröffentlichungstag der Anmeldung: **12.04.1995**
(21) Anmeldenummer: 94112757.3
(22) Anmeldetag: 16.08.1994
(51) Int. Cl.: G01M 3/32

(54) **Verfahren und Vorrichtung zur Erkennung eines Lecks in einem Behälter, insbesondere einer Kunststoff-Flasche**

(30) Priorität: 08.10.1993 CH 3039/93; 07.02.1994 CH 346/94
(71) Anmelder: ELPATRONIC AG, CH-6303 Zug (CH)
(72) Erfinder: Gernet, Pierre, CH-5400 Ennetbaden (CH); Jungo, Daniel, CH-8116 Würenlos (CH); Ubezio, Stefan, CH-8953 Dietikon (CH)

(57) **Zusammenfassung**

Gemäss dem Verfahren wird eine zu prüfende Flasche (1) mit Druckluft befüllt und es wird nach einer Beruhigungszeit mittels eines Durchflusssensors (9) geprüft, wieviel Luft die Flasche verlässt. Liegt die Flasche verlassende Luft innerhalb eines vorbestimmten Bereiches, so wird geschlossen, dass die Flasche (1) kein Leck aufweist. Liegt die Luftmenge oberhalb eines vorbestimmten Bereiches, so kann darauf geschlossen werden, dass die Flasche mit einem Leck behaftet ist. Durch das Verfahren ergibt sich eine rasche Erkennung auch kleiner Lecks, was das Verfahren für die industrielle Prüfung von Flaschen geeignet macht.

## Beschreibung

Die Erfindung betrifft ein Verfahren zur Erkennung eines Lecks in einem Behälter, insbesondere einer Kunststoff-Flasche. Ferner betrifft die Erfindung eine Vorrichtung zur Durchführung des Verfahrens.

Insbesondere bei Kunststoff-Mehrwegflaschen, z.B. PET-Flaschen, stellt sich das Problem, dass die Flaschen vor der erneuten Befüllung auf das Vorhandensein von Lecks geprüft werden müssen. Dabei sollten auch sehr kleine Lecks von z.B. 0,3 mm Durchmesser oder sogar geringer in sehr kurzer Zeit erkannt werden können, da die Flaschen in den Abfüllbetrieben auf Förderanlagen mit hoher Geschwindigkeit von 30'000 bis 60'000 Flaschen pro Stunde gefördert werden und sich die Leck-Erkennung an diese Fördergeschwindigkeit anzupassen hat. Es muss daher möglich sein, ein Leck, und insbesondere auch ein sehr kleines Leck, in einer Zeit von ungefähr 400 msek. zu erkennen, da diese Zeit bei der genannten Förderrate zur Verfügung steht, wenn die Flaschen ein Prüfkarussell durchlaufen.

Der Erfindung liegt deshalb die Aufgabe zugrunde, ein Verfahren zu schaffen, welches das rasche Prüfen von Behältern auf das Vorhandensein von Lecks, insbesondere auch sehr kleinen Lecks ermöglicht und wobei dieses Verfahren einfach und in einem industriellen Umfeld sicher einsetzbar sein soll.

Diese Aufgabe wird bei einem Verfahren der eingangs genannten Art dadurch gelöst, dass der Behälter mit einem Fluid unter Druck, insbesondere mit Druckluft, befüllt wird, wobei während oder nach der Befüllung ein Durchflusssensor an die Behältermündung angeschlossen ist und dass nach der Befüllung das Durchflusssensor-Ausgangssignal ausgewertet wird. Anstelle einer Befüllung kann auch eine (teilweise) Evakuierung treten.

Es hat sich gezeigt, dass durch einen Durchflusssensor die Aufgabe innerhalb der vorgegebenen Zeit- und Leckgrösse-Limiten auf einfache Weise erfüllt werden kann. Gemäss der Erfindung wird dabei zunächst die Flasche mit Druckluft beaufschlagt und es wird nachher mittels des Durchflusssensors ermittelt, ob aus der Flasche Luft in die Umgebung austritt. Dieser Durchfluss ist abhängig davon, ob aus der Flasche Luft durch ein Leck entweicht oder nicht. Es hat sich gezeigt, dass das Durchflusssensor-Ausgangssignal daher das Vorhandensein eines auch kleinen Lecks mit grosser Genauigkeit anzeigen kann. Wird mit Evakuation anstelle von Befüllung gearbeitet, so hat dies den Vorteil, dass der Aufwand für die Reinigung der Luft zur Befüllung entfällt.

Bei einer bevorzugten Ausführungsform der Erfindung wird zusätzlich zu der zu prüfenden Flasche ein Referenzbehälter, der bekannterweise kein Leck aufweist, mit Druckluft befüllt. Nachfolgend wird dann der Durchflusssensor zwischen Referenzbehälter und zu prüfendem Behälter geschaltet und es wird durch den Durchflusssensor festgestellt, in welchem Mass Druckluft von dem Referenzbehälter in den zu prüfenden Behälter fliesst, wobei das elektrische Ausgangssignal des Durchflusssensors wiederum das Vorhandensein eines Lecks in dem zu prüfenden Behälter mit hoher Sicherheit und guter Auswertbarkeit darstellt. Auch bei dieser Ausführung des Verfahrens kann anstelle der Befüllung eine Evakuation der Behälter erfolgen.

Der Erfindung liegt ferner die Aufgabe zugrunde, eine Vorrichtung zur Durchführung des Verfahrens zu schaffen. Diese ist gemäss Anspruch 7 ausgestaltet.

Bei einer bevorzugten Ausführungsform der Vorrichtung weist diese ein Karussell für die Behälter auf und einen am Karussell angeordneten Ventilkopf, welcher die Einbringung von Druckluft in die Behälter und deren nachfolgende Verbindung mit dem Durchflusssensor mechanisch steuert. Dadurch ergibt sich eine besonders einfache und für den schnellen industriellen Prüfbetrieb geeignete Vorrichtung.

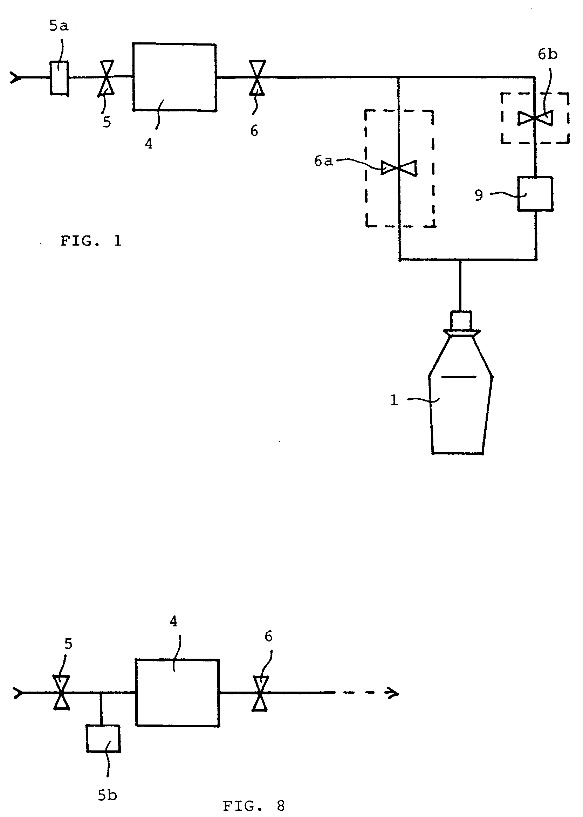

Nachfolgend werden Ausführungsbeispiele der Erfindung anhand der Zeichnungen näher erläutert.
Dabei zeigt Figur 1 schematisch eine Anordnung zur Durchführung des erfindungsgemässen Verfahrens;
Figur 2 ebenfalls in schematischer Form eine weitere Anordnung zur Durchführung des Verfahrens;
Figur 3 in grob schematischer, perspektivischer Ansicht einen Ventilkopf zur Durchführung des Verfahrens gemäss Figur 2;
Figur 4 ebenfalls stark schematisch eine Draufsicht auf den Ventilkopf von Figur 3;
Figur 5a einen Vertikalschnitt entlang der Linie A-A von Figur 4;
Figur 5b einen Vertikalschnitt entlang der Linie B-B von Figur 4;
Figur 6a eine Darstellung des Druckverlaufes über der Zeit bei einer Ausführungsform des Verfahrens;
Figur 6b die Ausgangsspannung des Durchflusssensors über der Zeit beim Verfahren gemäss Figur 6a,
Figur 7 eine Anordnung zur Erläuterung einer weiteren Ausführungsform des Verfahrens; und
Figur 8 eine Ausführungsform zur Befüllung des Druckgefässes.

In Figur 1 ist als Beispiel eine Anordnung zur Erläuterung einer ersten Ausführungsform des Verfahrens in stark schematisierter Form gezeigt. Dabei soll eine Kunststoffflasche 1 auf das Vorhandensein eines Lecks, insbesonders auf das Vorhandensein eines sehr kleinen Lecks geprüft werden. Dazu ist in dem Beispiel ein Druckgefäss 4 vorgesehen, welches über ein Reduzierventil 5a bei geöffnetem Ventil 5 und geschlossenem Ventil 6 auf einen vorbestimmten Druck P mit Druckluft gefüllt wird. Danach wird das Ventil 5 geschlossen und das Ventil 6 geöffnet. Der Druck P expandiert in den zu prüfenden Behälter 1. Der Durchflusssensor 9 misst einen abnehmenden Durchfluss, bis sich neu im Druckgefäss 4 und in der Flasche 1 einstellenden Drücke P4 und P1 gleich gross sind. Weist die Flasche 1 also kein Leck auf, so nimmt das Signal des Durchflusssensors grundsätzlch bis zum Wert Null ab, da bei ausgeglichenem Druck (P4=P1) kein Durchfluss mehr erfolgt. Ist der Behälter 1 indes leck, so nimmt der Durchfluss nur bis zu einem bestimmten Grad, abhängig insbesonders vom Leckdurchmesser, ab. Dieser Unterschied zu einem dichten Behälter ist mit einem handelsüblichen empfindlichen Durchflusssensor, der in der Regel ein dem Luftdurchfluss proportionales elektrisches Signal abgibt, sehr gut messbar, ohne weiteres bis zu einem Leckdurchmesser von 0,2 mm.

Bei einer weiteren Ausführungsform des Verfahrens werden anstelle des Ventils 6 die Ventile 6a und 6b verwendet, die in Figur 1 in gestrichelten Kästen als Alternative dargestellt sind. Dabei wird zur Befüllung des Behälters 1 zunächst nur das Ventil 6a geöffnet. Die Druckluft im Druckgefäss 4 expandiert somit in den Behälter 1. Nach einer Beruhigungszeit für die Strömung wird as Ventil 6b geöffnet und das Ventil 6a geschlossen. Danach erfolgt die Durchflussmessung, wie bereits vorgängig beschrieben. Durch die Anordnung mit den Ventilen 6a, 6b kann der Durchflusssensor vor zu grossen Flüssen geschützt werden, die ihn in die Sättigung treiben würden. Dies erlaubt somit auch die Verwendung eines besonders empfindlichen Sensors 9. Es ist ferner möglich, das Ventil 6a und die entsprechenden Zuleitungen mit grösserem Querschnitt auszulegen und dadurch eine raschere Befüllung des Behälters 1 zu erreichen. Es ergibt sich zudem eine Beschleunigung der Messung, d.h. das Signal liegt rascher vor.

Figur 8 zeigt, wie anstelle des Reduzierventils 5a das Ventil 5 zusammen mit einem Drucksensor 5b treten kann. Das Ventil 5 wird so lange geöffnet, bis der vorbestimmte Druck P erreicht ist. Dadurch kann der Füllvorgang des Gefässes 4 beschleunigt werden. Anstelle des Druckgefässes 4 kann natürlich auch eine andere geeignete Druckquelle zur Durchführung des Verfahrens verwendet werden. Dem Durchflusssensor kann auch eine (in Figur 1 nicht dargestellte) Düse vorgeschaltet sein, um ein Uebersteuern sicher zu verhindern und um somit ein Arbeiten im linearen Messbereich zu erzielen. Als Befüllzeiten können z.B. Zeiten von 25 bis 50 msec (bei P=4 bar) gewählt werden, als Beruhigungszeit z.B. 250 msec und als Messzeit 100 msec.

Die dargestellte Anordnung ist natürlich grob schematisch und zeigt nicht die in einer industriellen Prüfanlage nötigen Förderelemente für die Behälter 1 und die entsprechenden Anpassungselemente, um die Flasche möglichst luftdicht befüllen und entleeren zu können. Solche, an die Behältermündung angepasste Mündungsstücke sind bekannt und müssen hier nicht weiter erläutert werden. Ebenso sind die dargestellten Ventile, welche in der Regel elektrisch oder pneumatisch schaltbare Ventile sind, bekannt und müssen hier nicht weiter erläutert werden. Dies gilt gleichermassen für die erwähnte Düse und den ebenfalls erwähnten handelsüblichen Durchflusssensor 9. Die als Beispiel gegebenen Zeiten für die Befüllung, Beruhigung und die Entleerung richten sich nach der bei einer industriellen Prüfanlage bei einem hohen Flaschendurchsatz, von z.B. 600 Flaschen/Minute, zur Verfügung stehenden Zeit. Natürlich können diese Zeiten auch entsprechend verlängert werden, wenn bei einer bestimmten Anwendung mehr Prüfzeit zur Verfügung steht. Es hat sich aber gezeigt, dass innerhalb der angegebenen Zeiten, welche einer Gesamtprüfzeit von ca. 400 msek. entsprechen, auch ein kleines Leck mit guter Sicherheit erkannt werden kann.

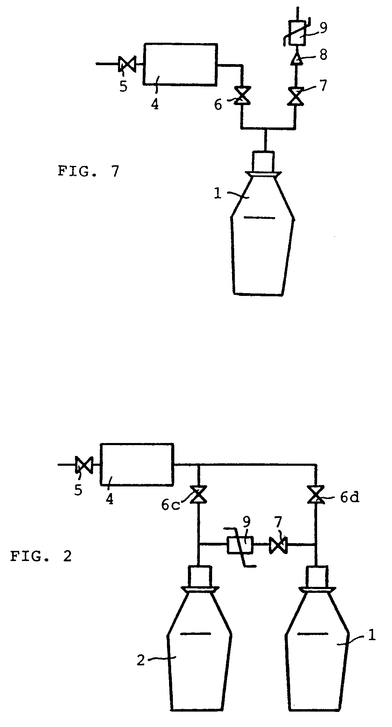

Figur 2 zeigt eine Anordnung zur Erläuterung eines Ausführungsbeispiels des Verfahrens, wobei die Anordnung von Figur 2 ebenfalls in stark schematisierter Form dargestellt ist. Das zu den einzelnen Elementen der Anordnung in Zusammenhang mit Figur 1 Gesagte gilt hier ebenfalls. Bei dem Verfahren gemäss Anordnung nach Figur 2 werden über die Ventile 6c und 6d zunächst zwei Behälter mit Druckluft befüllt. Einerseits der zu prüfende Behälter 1 und andererseits ein leckfreier Referenzbehälter 2. Vorzugsweise ist dabei der Referenzbehälter gleich ausgestaltet, wie der zu prüfende Behälter. Ist z.B. der zu prüfende Behälter eine 1,5 Liter PET-Flasche, so wird auch als Referenzbehälter eine solche Flasche eingesetzt. Im Fall von zu prüfenden 0,5 Liter PET-Flaschen wird auch eine 0,5 Liter PET-Flasche als Referenzbehälter 2 eingesetzt. Aufgrund der Differenzmessung kann die Genauigkeit erhöht werden. Ferner wird die Auswertung des Sensorsignals einfacher, da sich die meisten thermodynamischen Effekte während der Befüllung kompensieren. Wie gesagt werden beide Behälter 1,2 aus dem Tank 4 der z.B. wiederum Druckluft mit einem Druck von ca. 4 bar enthält, während einer vorbestimmten Zeit befüllt. In dieser Phase ist das Ventil 7, welches den Durchflusssensor 9 schützt, geschlossen. Nach der Befüllung der Behälter 1,2 bzw. nach dem Schliessen der Ventile 6c,6d wird wiederum eine Beruhigungszeit abgewartet, bei welcher der Durchflusssensor 9 noch nicht aktiviert wird. Wiederum kann in dieser Zeit das allenfalls im Behälter 1 vorhandene Leck wirken. Die Befüllzeit und die Beruhigungszeit kann im Rahmen der oben angegebenen Zeiten gewählt werden. Nach Ablauf der Beruhigungszeit wird das Ventil 7 geöffnet und es wird durch den Durchflusssensor festgestellt, in welchem Masse ein Luftfluss von der Referenzflasche 2 zu der zu prüfenden Flasche 1 stattfindet. Auch hier könnte eine Düse zum Schutz des Sensors vorgesehen sein, eine solche ist aber in Figur 2 nicht dargestellt. Nach der Messzeit von z.B. 100 msek. wird das Ventil 7 erneut geschlossen und es wird der bisherige Behälter 1 gegen einen neuen zu prüfenden Behälter 1 ausgetauscht und die Prüfung kann erneut durch Oeffnen der Ventile 6c, 6d eingeleitet werden. Bei diesem Beispiel ist das Äusgangssignal des Durchflusssensors 9 so zu interpretieren, dass bei geringem Ausgangssignal d.h. bei geringem Durchfluss kein Leck in der Flasche 1 vorhanden ist. In diesem Fall sind ja die Druckverhältnisse in der Flasche 1 und im Referenzbehälter 2 im wesentlichen gleich. Hingegen wird bei grösserem Durchfluss durch den Durchflusssensor 9 von der Referenzflasche 2 zum Prüfbehälter darauf zu schliessen sein, dass im Prüfbehälter 1 ein Leck vorliegt, was den Druck in diesem Behälter 1 reduziert hat. Es hat sich auch bei dieser Ausführungsform des Verfahrens gezeigt, dass sehr kleine Lecks von z.B. 0,2 mm Durchmesser innerhalb der geringen zur Verfügung stehenden Prüfzeit von z.B. 400 msek. gut erkannt werden können. Auch bei der geschilderten Ausführung mit Referenzbehälter können beide Behälter teilweise evakuiert werden anstelle der Befüllung mit Druckluft. Auch dabei ergibt sich dann beim Vorhandensein eines Lecks ein entsprechender Durchfluss durch den Sensor.

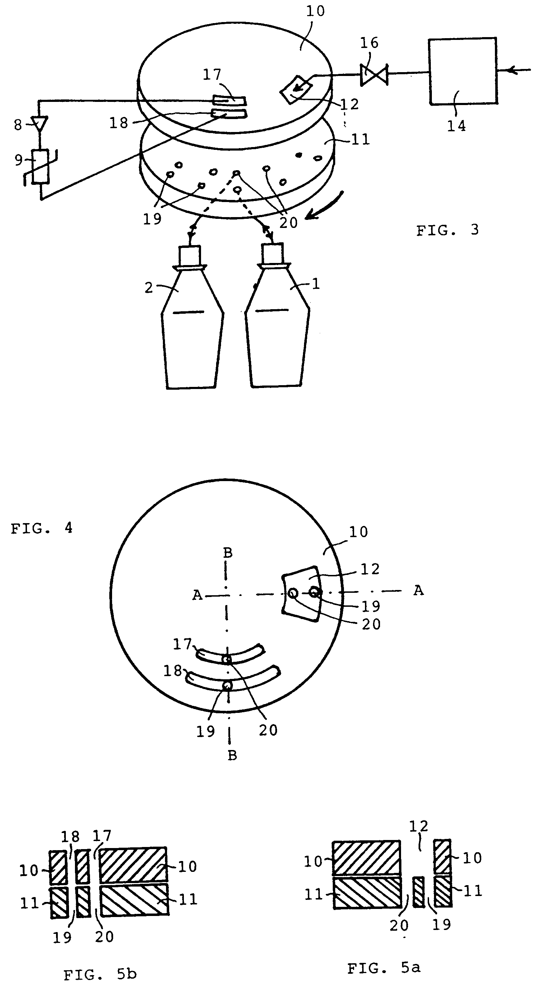

Figur 3 zeigt in grob schemahafter und perspektivischer Ansicht als Beispiel eine Vorrichtung zur Durchführung des Verfahrens. Dabei ist eine nicht gezeigte Förderanlage für Kunststoff-Mehrwegflaschen vorhanden, auf welcher die zur erneuten Befüllung zurücklaufenden Mehrwegflaschen gefördert werden. Diese Flaschen durchlaufen mehrere Prüfstationen u.a. auch eine solche zur Leckmessung. Auf bekannte Weise ist dabei innerhalb der Förderanlage eine Karussell-Fördereinrichtung vorhanden. Die zu prüfende Flasche 1 in Figur 3 befindet sich in dieser nicht dargestellten Karussell-Förderanlage. Oberhalb derselben ist ein Ventilkopf 10,11 vorgesehen. Dieser Ventilkopf weist eine feststehende Scheibe 10 und eine sich mit dem Karussell drehende Scheibe 11 auf. Mittels Durchlässen in diesen beiden Scheiben wird, wie nachfolgend beschrieben, die Befüllung der Flaschen mit Druckluft und deren Entleerung durch den Durchflusssensor gesteuert. Ausgeführt wird dabei das Verfahren, wie es mittels Figur 2 erläutert worden ist. Es ist also für jede Flasche 1 eine Referenzflasche 2 vorgesehen, welche jeweils ebenfalls befüllt wird und welche ebenfalls mit dem Durchflusssensor 9 verbunden wird. Die Befüllung der Flaschen erfolgt dabei aus dem Drucktank 14, welcher aus einer nicht dargestellten Quelle gespiesen wird. Dieser Tank 14 wird auf konstantem Druck von z.B. 4 bar gehalten. Ueber das steuerbare Ventil 16 wird die in die jeweils zu prüfende Flasche 1 und die zugehörige Referenzflasche 2 Druckluft über den Einlassschlitz 12 der oberen Scheibe 10 eingefüllt. Dies erfolgt jeweils dann, wenn die sich drehende Scheibe 11 die entsprechenden mit der jeweiligen Flaschenmündung verbundenen Oeffnungen 19 und 20 unterhalb des Einlassschlitzes 12 vorbeiführt. Dies ist in den Figuren 4 und 5b weiter dargestellt, welche eine Draufsicht auf die Scheibe 10 bzw. einen Schnitt vom Mittelpunkt der Scheibe nach aussen entlang der Linie B-B darstellen. Die in die Flaschen zu füllende Luft gelangt also, sobald das Ventil 16 geöffnet worden ist, in den Einlass 12 und durch diesen in die Durchlässe 19 und 20 und dadurch in die jeweilige Flasche. Nicht dargestellt ist, wie die Druckleitung vom Ventil 16 an den Einlass 12 luftdicht gekoppelt ist und nicht dargestellt ist, wie die Flaschen 1 und 2 jeweils an die Durchlässe 19 und 20 luftdicht angekoppelt werden. Solche Koppelungselemente sind aber bekannt und müssen daher hier nicht im Detail dargestellt werden. Die beiden Scheiben 10 und 11 laufen abgedichtet aufeinander. Auch solches ist aber bekannt und muss hier nicht weiter erläutert werden. Eine in das Karussell gelangende Flasche 1 wird also mit einem zugehörigen Durchlass 19 der Scheibe 11 verbunden und erhält dadurch auch eine zugehörige Referenzflasche 2, welche immer mit der Scheibe 11 umläuft. Die mit der Scheibe 11 und dem Karussell laufenden Flaschen 1,2 gelangen dann wie bereits gesagt in den Bereich des Einlassschlitzes 12. Die eigentliche Befüllzeit der Flaschen 1 und 2 wird aber vorzugsweise nicht durch die Dimension des Schlitzes 12 bestimmt, sondern durch das steuerbare Ventil 16. Dadurch kann die Befüllungszeit unabhängig von der Umlaufgeschwindigkeit des Karussells gewählt werden. So wird nur mit einem pneumatischen Arbeitspunkt gearbeitet, was im speziellen für die Auslegung des Ventilkopfes und des Sensors wichtig ist. Bei der unten aufgeführten Druckabfallphase und Messphase bringt dieses Verfahren den grossen Vorteil, dass bei langsamer Maschinengeschwindigkeit auch mehr Zeit für diese Phasen zur Verfügung steht. Bei der weiteren Drehung des Karussells gelangen die betrachteten Flaschen 1,2 in den Bereich ausserhalb des Schlitzes 12. Die Flaschen sind nun befüllt und abgedichtet verschlossen. Es wird nun die vorbestimmte Beruhigungszeit und allenfalls Druckabfallzeit für die leckbehaftete Flasche 1 abgewartet. Beim weiteren Umlauf der Flaschen 1,2 gelangen diese nun in den Bereich der Auslassschlitze 17 und 18. Mit den Auslassschlitzen 17 und 18 ist eine Düse 8 und der Durchflusssensor 9 verbunden. Auch hier könnte noch ein schaltbares Ventil angeordnet sein. Sobald die Durchlässe 19 bzw. 20, welche zu den betrachteten Flaschen 1,2 gehören, sich mittels der Schlitze 17,18 öffnen, erfolgt der Druckausgleich zwischen der Referenzflasche und der zu prüfenden Flasche 1, wie anhand der Figur 2 beschrieben. Während der Messzeit wird nun das Ausgangssignal des Durchflusssensors ausgewertet und es kann das Leck unter Berücksichtigung der Maschinengeschwindigkeit berechnet werden. Danach verlässt die Flasche 1 das Karussell und die Flasche 2 läuft weiter mit der Scheibe 11 um, bis ihr wieder beim Flascheneinlauf in das Karussell eine neue zu prüfende Flasche 1 zugeordnet wird. In Figur 3 sind nur einige wenige Durchlässe 19 und 20 dargestellt. Natürlich ist die Scheibe 11 jeweils mit einer grösseren Anzahl solcher Durchlässe entsprechend der Anzahl von Flaschenaufnahmestellen im Karussell versehen. Im Karussell können z.B. 16 oder 20 Flaschenaufnahmestellen vorgesehen sein und entsprechend sind 16 oder 20 Durchlässe 19,20 vorhanden.

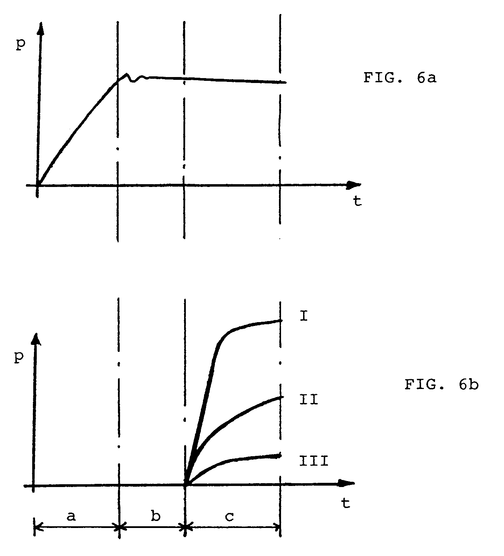

Figur 6a zeigt den Druckaufbau über der Zeit in den Flaschen 1,2. Dabei ist einerseits die Befüllungsphase a (Figur 6b) ersichtlich, während welcher der Druck in den Flaschen 1,2 ansteigt. Darauf folgt die Beruhigungsphase b und danach die Messphase c, während welcher der Durchflusssensor die beiden Flaschen verbindet. In Figur 6b sind in grob schematischer Form verschiedene mögliche Ausgangssignale I, II und III des Durchflusssensors während der Messzeit c dargestellt. Figur 6b zeigt dabei z.B. die dem Fluss proportionale elektrische Ausgangsspannung u des Durchflusssensors, die jeweils eine Anstiegsphase und danach das eigentliche, den Durchfluss darstellende Signal umfasst. Wird während der Messzeit c z.B. eine Ausgangsspannung u gemäss der Kurve I durch die Auswerteschaltung empfangen, so kann durch diese geschlossen werden, dass die zu prüfende Flasche 1 ein relativ grosses Leck aufweist, da durch den Durchflusssensor ein recht grosser Fluss von Druckluft von der Referenzflasche 2 zu der Prüfflasche 1 erfolgt. Es liegt also ein grosses Leck vor. Verläuft die Ausgangsspannung des Durchflusssensors ungefähr gemäss Kurve II, so kann auf ein kleines Leck geschlossen werden. Auch diese Prüfflasche 1 wird also während ihres weiteren Förderwegs vor der erneuten Befüllung mit einem Getränk als fehlerhaft auszuscheiden sein. Ein Kurvenverlauf entsprechend der Kurve III hingegen kann als gut beurteilt werden. Ein solcher geringer Durchfluss liegt im Rahmen der Messungenauigkeit und lässt nicht auf ein Leck schliessen.

In Figur 7 ist als Beispiel eine Anordnung zur Erläuterung einer weiteren Ausführungsform des Verfahrens in stark schematisierter Form gezeigt. Dabei soll eine Kunststoffflasche 1 auf das Vorhandensein eines Lecks, insbesondere auch auf das Vorhandensein eines sehr kleinen Lecks geprüft werden. Zu diesem Zweck wird in einem ersten Schritt die Flasche 1 über das Ventil 6 mit hohem Einlassdruck, der z.B. 4 bar betragen kann, während einer vorbestimmten, konstanten Zeit, welche ca. 25-50 msek. betragen kann, mit Druckluft gefüllt. Danach wird das Ventil 6 geschlossen. Der zur Befüllung dienende Drucklufttank 4, kann danach wieder mittels des Ventils 5 aus einer nicht dargestellten Druckluftquelle auf konstanten Druck gebracht werden. Die befüllte Flasche wird während einer vorbestimmten Zeit, welche z.B. 250 msek. betragen kann, mit der Druckluftbefüllung belassen. In dieser Zeit wirkt ein allenfalls vorhandenes Leck und reduziert den Fülldruck in der Flasche 1. Nach der genannten Beruhigungszeit wird das Ventil 7 geöffnet und die in der Flasche enthaltene Druckluft tritt über die Düse 8 und den Durchflusssensor 9 ins Freie aus. Der Durchflusssensor 9 ist ein handelsüblicher Durchflusssensor, welcher ein dem Luftdurchfluss proportionales elektrisches Signal abgibt. Die Düse 8 dient dazu, ein Uebersteuern des Durchflusssensors zu verhindern, damit dieser möglichst in seinem linearen Messbereich arbeiten kann. Das Ventil 7 wird während einer vorbestimmten Zeit, welche z.B. 100 msek. betragen kann, offengehalten und der Durchflusssensor prüft wieviel Druckluft in dieser Zeit noch aus der Flasche entweichen kann. Dies ist natürlich abhängig vom Druck in der Flasche und damit davon, ob ein Leck vorhanden ist oder nicht. Aufgrund des Ausgangsignals des Durchflusssensors lässt sich daher sagen, ob die Flasche 1 ein Leck aufweist oder nicht. Die ist der Fall, wenn das Ausgangssignal des Sensors unterhalb eines vorbestimmten Wertes bleibt.

## Patentansprüche

1. Verfahren zur Erkennung eines Lecks in einem Behälter, insbesondere einer Mehrweg-Kunststoff-Flasche, dadurch gekennzeichnet, dass der Behälter (1) mit einem Fluid unter Druck, insbesondere mit Druckluft, befüllt wird, oder dass der Behälter evakuiert wird, wobei während oder nach der Befüllung, bzw. der Evakuation, ein Durchflusssensor (9) an die Behältermündung angeschlossen ist, und dass nach der Befüllung, bzw. Evakuation, das Durchflusssensor-Ausgangssignal ausgewertet wird.

2. Verfahren nach Anspruch 1, dadurch gekennzeichnet, dass zusätzlich ein Referenz-Behälter (2) mit dem Fluid befüllt wird, bzw. evakuiert wird, und dass der Durchflusssensor (9) an die beiden Behältermündungen angeschlossen ist, um den Fluss vom Referenz-Behälter zum Behälter zu ermitteln.

3. Verfahren nach Anspruch 2, dadurch gekennzeichnet, dass als Referenz-Behälter (2) ein Behälter vorgesehen ist, der im wesentlichen identisch wie der zu prüfende Behälter ausgestaltet ist.

4. Verfahren nach einem der Ansprüche 1 bis 3, dadurch gekennzeichnet, dass der zu prüfende Behälter jeweils ein Behälter aus einer Vielzahl von entlang einer Fördereinrichtung geförderter Behälter ist und aus einem Fluidtank mit im wesentlichen konstantem Druck befüllt wird.

5. Verfahren nach einem der Ansprüche 1 bis 4, dadurch gekennzeichnet, dass dem Durchflusssensor ein schaltbares Ventil (6b; 7) vorgeschaltet ist.

6. Verfahren nach einem der Ansprüche 1 bis 5, dadurch gekennzeichnet, dass dem Durchflusssensor eine Düse (8) vorgeschaltet ist.

7. Vorrichtung zur Durchführung des Verfahrens nach einem der Ansprüche 1 bis 6, gekennzeichnet durch eine Förderanlage für die jeweils zu prüfenden Behälter (1), eine Druckluftspeisung (4,5,6;6a) zur Befüllung der Behälter (1;2) und eine Messeinrichtung mit einem Durchflusssensor (9) und einer Auswerteschaltung für das Durchflusssensor-Ausgangssignal.

8. Vorrichtung nach Anspruch 7, gekennzeichnet durch eine Fördereinrichtung zur Förderung der Behälter umfassend ein Karussell und einen am Karussell angeordneten Ventilkopf, durch welchen auf dem Karussell umlaufende Behälter mit der Druckquelle und nachfolgend mit dem Durchflusssensor verbindbar sind.

9. Vorrichtung nach Anspruch 7, dadurch gekennzeichnet, dass zwischen Druckquelle (14) und Ventilkopf (10,11) ein schaltbares Ventil (16) angeordnet ist.

10. Vorrichtung nach einem der Ansprüche 7 bis 9, dadurch gekennzeichnet, dass anstelle der Druckluftspeisung eine Vakuumquelle vorgesehen ist.
